# EUROPÄISCHE PATENTSCHRIFT

(11) **EP 2 494 639 B1**
(45) Veröffentlichungstag und Bekanntmachung des Hinweises auf die Patenterteilung: **24.07.2013**
(21) Anmeldenummer: 10771013.9
(22) Anmeldetag: 18.10.2010
(51) Int. Cl.: H01M 6/50, H01M 2/20, H01M 2/34, H01H 39/00

(54) **ABSCHALT- ODER AUFTRENNUNG EINES ENERGIESPEICHERS**
DEACTIVATION OR DISCONNECTION OF AN ENERGY STORE
COUPURE OU DÉCONNEXION D'UN ACCUMULATEUR D'ÉNERGIE

(30) Priorität: 28.10.2009 DE 102009050996
(43) Veröffentlichungstag der Anmeldung: 05.09.2012
(73) Patentinhaber: Volkswagen Aktiengesellschaft, 38440 Wolfsburg (DE)
(72) Erfinder: DEYDA, Andreas, 38173 Erkerode (DE)
(86) Internationale Anmeldenummer: PCT/EP2010/006340
(87) Internationale Veröffentlichungsnummer: WO 2011/050913

(56) Entgegenhaltungen:
- WO-A1-2008/076040
- DE-A1-102006 049 270
- DE-A1-102008 006 026
- DE-A1-102008 010 971

## Beschreibung

Die Erfindung betrifft eine Energiespeichereinrichtung für ein Kraftfahrzeug, insbesondere ein Hybrid-/Elektrofahrzeug, mit mindestens zwei Energiequellen, z.B. Batteriezellen, bzw. ein Verfahren zur Auftrennung von elektrischen Verbindungen einer derartigen Energiespeichereinrichtung.

In Unfallsituationen eines Fahrzeuges, insbesondere eines Hybrid- oder Elektrofahrzeuges, kann ein Batteriegehäuse, das in der Regel aus Metall besteht und eine oder mehrere Batteriezellen umfasst, durch Verformung der Fahrzeugskarosserie an zwei Stellen auf die Batteriepole der Batterie oder Batteriezelle drücken, so könnte die Batterie kurzgeschlossen werden und aufgrund der dadurch erzeugten Verlustwärme aufplatzen. Ein Kurzschluss im Bordnet oder in der Batterie führt zur Erwärmung an den Kontaktstellen des Kurzschlusses und könnte die Batterie und das Fahrzeug in Brandgefahr bringen. Es ist sicher zu stellen, dass die Fahrzeugsbatterie während oder nach einem Unfall nicht kurzgeschlossen und vom Bordnetz sicher getrennt ist.

Es sind eine Reihe von Sicherheitsvorrichtungen in Kraftfahrzeugen zur Auftrennung der Batterie von Bordnetzen bekannt. Bei solchen Sicherheitsvorrichtungen wird der von einer Fahrzeugsbatterie abgegebene elektrische Strom vom Bordnetz abgeschaltet, indem die elektrische Verbindung zu der Batterie entweder mittels eines Messers abgeschnitten wird, um die Batterie vom Bordnetz im Schadenfall oder anderen Notfällen schnell und sicher aufzutrennen. Eine Beschädigung von technischen Einrichtungen oder eine Gefährdung von Personen kann verhindert werden. In dem Fall werden die aus einem Batteriesystem herausführenden Leitungen des Fahrzeuges im Crashfall getrennt. Die Fahrzeugsbatterie ist jedoch weiterhin leistungsfähig und wird von einem möglichen Kurzschluss nicht ausgeschlossen.

Aus der WO 9954904 ist eine Vorrichtung zum Auftrennten eines elektrischen Stromkreises bekannt, wobei ein aktivierbares Mittel einen Auslösedruck, der unmittelbar oder über einen starren Mittel auf eine Stromleitung wirkt, erzeugen kann.

DE 44 13 847 B4 offenbart eine Sicherheitseinrichtung für ein Kraftfahrzeug mit einer Abschalteinrichtung, durch die eine elektrische Energiequelle von einem Bordnetz des Fahrzeugs abtrennbar ist, wobei die Abschalteinrichtung ein mit Treibenergie beaufschlagbares Trennmittel, bspw. ein Messer aufweist.

Die gattungsbildende WO 2008/07604 A1 offenbart eine Vorrichtung zum Auftrennen eines Stromkreises in einem Batteriestapel. Zum Auftrennen des Stromkreises werden zunächst Pyrobolzen gezümdet. Hierdurch wird der äußere Druck vernindert, durch welchen die einzelnen Baterrien des Stapels aneinander pepresstwerden. In einem zweiten Schritt wird ein Luftkissen ("air bag") aufgeblasen, welches zwischen den Batterien angeordnet ist, hierdurch werden die Batterien in unterschiedliche Richtungen verschoben, wobei die elektrische Verbindung zwischen den Batterien unterbrochen wird.

Der Erfindung liegt die Aufgabe zu Grunde, eine Energiespeichereinrichtung mit mindestens zwei Energiequellen, mit einem Schutz vor Kurzschluss zu schaffen.

Diese Aufgabe wird erfindungsgemäß durch eine Energiespeichereinrichtung mit den Merkmalen des Patentanspruchs 1 bzw. ein Verfahren mit den Merkmalen des Patentanspruchs 9 gelöst. Die abhängigen Ansprüche betreffen vorteilhafte Weiterbildungen und Ausgestaltungen der Erfindung.

Der Erfindung liegt die Idee zugrunde, in kritischen Fällen eine mögliche direkte elektrische Verbindung zwischen dem Pluspol und dem Minuspol einer Energiequelle zu vermeiden, um eine Kurzschlussgefahr auszuschließen. Erfindungsgemäß wird eine Energiespeichereinrichtung mit mindestens zwei Energiequellen, die über eine elektrische Verbindung verbunden sind, vorgesehen, wobei die Energiespeichereinrichtung mindestens ein Sicherheitselement zur Auftrennung der elektrischen Verbindung zwischen den Energiequellen aufweist, wobei das Sicherheitselement verformbar und/oder expandierbar ist, um die elektrische Verbindung zu unterbrechen. Wenn eine Kurzschlussgefahr in der Energiespeichereinrichtung bzw. den Energiequellen oder in einem daran angeschlossen Stromkreis entstehen könnte, kann das Sicherheitselement durch seine Verformung oder Expansion direkt an die elektrische Verbindung drücken, um sie irreversibel aufzubrechen. Die Energiespeichereinrichtung kann bspw. als eine Batterie ausgeführt sein, die zwei oder mehrere Batteriezellen für ein Kraftfahrzeug, insbesondere ein Hybrid-/Elektrofahrzeug umfasst.

Gemäß einer vorteilhaften Weiterbildung der Erfindung weist die Energiespeichereinrichtung mindestens ein Treibmittel zum Verformen und/oder Expandieren des Sicherheitselements auf. Das Treibmittel kann eine Crash-Treibladung sein und bei einem Unfall z.B. durch eine steuerbare Auslöseeinheit aktiviert werden. Ist die Treibladung gezündet, expandiert das Sicherheitselement und übt eine durch seine Expansion erzeugte Kraft direkt auf die elektrische Verbindung der Energiequellen aus, damit die elektrische Verbindung aufgebrochen wird.

Gemäß einer vorteilhaften Ausgestaltung der Erfindung weist die Energiespeichereinrichtung mindestens ein Ermittlungsmittel, insbesondere einen Crashsensor, auf, wobei das Treibmittel nach einem Ermittlungsergebnis des Ermittlungsmittels aktivierbar ist. Hat das Ermittlungsmittel einen Notfall (z.B. Aufprall) erkannt, sendet es z.B. ein elektrisches Signal an ein Steuergerät, welches wiederum die Auslöseeinheit des Treibmittels aktivieren kann.

Gemäß einer weiteren vorteilhaften Ausgestaltung der Erfindung wird das Sicherheitselement als ein elastischer Gewebe- oder Kunststoffschlauch ausgestaltet. Wird der Schlauch verformt oder expandiert, nimmt der Querschnitt des Schlauches zu. Der Schlauch schlägt dann durch die Expansion direkt an die elektrische Verbindung der Energiequellen an, um diese Verbindung aufzubrechen. Ein solcher Schlauch kann nach der Verformung oder Expansion ohne Austausch wiederholt verwendet werden, nachdem er wieder in seinen ursprünglichen Zustand zusammen gefallen ist.

Gemäß einer weiteren vorteilhaften Ausgestaltung der Erfindung weist die elektrische Verbindung mindestens eine Sollbruchsstelle, insbesondere eine Nut, auf. Auf dieser Weise wird erstens zumindest eine Abbrechungsstelle der elektrischen Verbindung vorab festgelegt, und zweitens macht diese vorbestimmte Sollbruchstelle es leicht, die elektrische Verbindung aufzubrechen. Wenn die elektrische Verbindung aus einem spröden, elektrisch leitfähigen Material, wie z.B. einer bestimmten Kupferlegierung oder einem Aluminiumguss, besteht, kann die elektrische Verbindung leicht aufgebrochen werden.

Gemäß einer weiteren vorteilhaften Ausgestaltung der Erfindung wird das Sicherheitselement zwischen der elektrischen Verbindung und den Energiequellen angeordnet. Da der Abstand dazwischen in der Regel klein ist, aber das expandierte Sicherheitselement vergleichsweise einen größeren Querschnitt aufweist, kann das Sicherheitselement die Expansionskraft auf die elektrische Verbindung besser und kräftiger ausüben. Zudem kann der Platzbedarf der Energiespeichereinrichtung reduziert werden, weil ein zusätzlicher Platzbedarf für das Sicherheitselement durch seine Anordnung zwischen der elektrischen Verbindung und den Energiequellen eingespart wird.

Weiterhin wird ein Verfahren zur Auftrennung von elektrischen Verbindungen einer Energiespeichereinrichtung, insbesondere für ein Kraftfahrzeug, mit mindestens zwei Energiequellen angegeben, bei dem mittels zumindest eines Ermittlungsmittels, z.B. eines Crashsensors, eine Kurzschlussgefahr der Energiespeichereinrichtung, insbesondere einen Unfall, ermittelt wird, ein Treibmittel nach einem Ermittlungsergebnis des Ermittlungsmittels aktiviert wird, dann mindestens ein Sicherheitselement durch die Aktivierung des Treibmittels verformt und/oder expandiert wird, um zumindest eine elektrische Verbindung der Energiespeichereinrichtung aufzutrennen.

Nachfolgend wird die Erfindung anhand der in den Figuren dargestellten Ausführungsbeispiele näher beschrieben und erläutert.

Es zeigen:
- FIG 1: Energiespeichereinrichtung mit einem Sicherheitselement,
- FIG 2.: Sicherheitselement in Form eines Schlauchs.

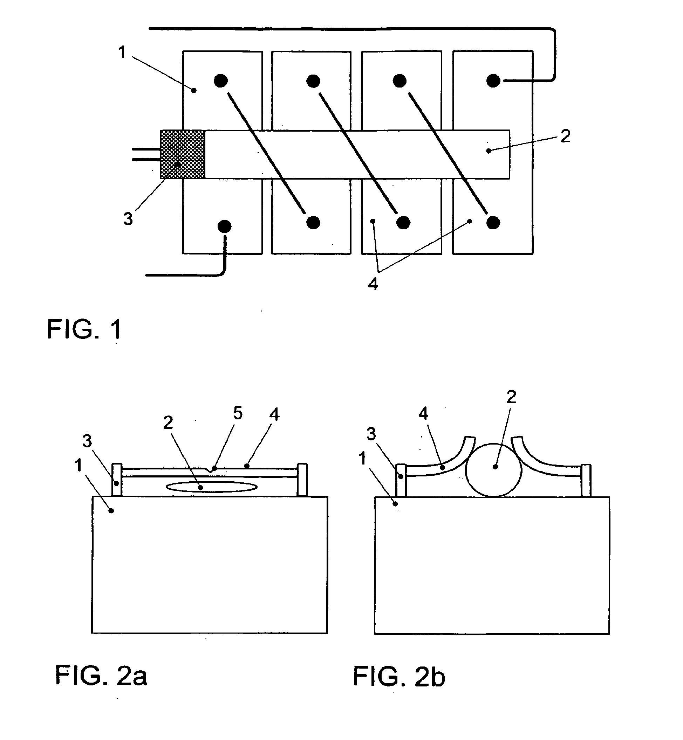

In FIG 1 wird eine Energiespeichereinrichtung als eine Fahrzeugbatterie mit mehreren in Reihe geschalteten Batteriezellen 1 und einem Sicherheitselement 2 dargestellt. Das Sicherheitselement 2 kann in Form eines elastischen Schlauches ausgebildet werden. Die elektrischen Verbindungen 4 können aus einer bestimmten Kupferlegierung oder einem Aluminiumguss bestehen und somit spröden ausgebildet werden. Die elektrischen Verbindungen 4 überbrücken den Pluspol 6 und den Minuspol 7 je zwei benachbarter Batteriezellen 1, um die Batteriezellen 1 seriell zu verbinden. Das Sicherheitselement 2 wird zwischen den elektrischen Verbindungen 4 und den Batteriezellen 1 angeordnet, wobei das Sicherheitselement 2 mit seiner Längsachse im Wesentlichen quer zu den elektrischen Verbindungen 4 und zwischen den Pluspolen 6 und den Minuspolen 7 auf den Batteriezellen 1 verlegt wird. An einem Ende des Sicherheitselements 2 wird eine Crash-Treibladung 3, die beim Crash gezündet bzw. aktiviert werden kann, angeordnet, um das Sicherheitselement 2 zu expandieren.

FIG 2 zeigt, dass das Sicherheitselement 2 in Form eines elastischen Schlauchs ausgebildet ist und wie der Schlauch 2 zur Auftrennung der elektrischen Verbindungen 4 funktioniert. Dabei wird der Schlauch 2 jeweils in seinem Ursprünglichen Zustand (a) und in seinem expandierten Zustand (b) dargestellt. Jede elektrische Verbindung 4 ist mit mindestens einer Nut 5 ausgebildet. Solche Nuten 5 können jeweils eine Sollbruchstelle der elektrischen Verbindung 4 definieren. Dies macht den Verbindungsabbruch leicht, wenn eine Schlagkraft von unten an die Verbindung 4 drückt. Diese verbiegt sich an der Stelle der Nut 5 nach oben und wird an dieser Stelle aufgebrochen.

Im Normalfall befindet sich der Schlauch 2 in seinem ursprünglichen Zustand zwischen den elektrischen Verbindungen 4 und den Batteriezellen 1. In einem Crashfall kann ein Ermittlungsmittel der Batterie oder des Fahrzeuges, insbesondere ein Crashsensor (hier nicht dargestellt), den Aufprall erkennen und sendet ein elektrisches Signal an ein Sicherheitssystem des Fahrzeugs, welches die Crash-Treibladung 3 aktiviert. Nach der Zündung brennt die Crash-Treibladung 3 ab und erzeugt Verbrennungsgase mit einem hohen Druck in dem Schlauch 2. Der Schlauch 2 nimmt aufgrund des ansteigenden Innendruckes einen expandierenden Querschnitt an, der größer ist als im ursprünglichen Zustand. Mit dem zunehmenden Querschnitt schlägt die Außenwand des Schlauches 2 an die elektrischen Verbindungen 4 an. Der Schlauch 2 übt somit durch seine gespannte Außenwand eine Schlagkraft direkt auf die Verbindungen 4 aus und bricht diese an den Nuten 5 ab. Die Batterie bzw. die Batteriezellen 1 werden dann sicher abgeschaltet, damit ein Kurzschluss in der Batterie oder den Batteriezellen 1 ausgeschlossen wird. Durch den Schlauch 2 kann die Batterie ebenfalls von dem Bordnetz des Kraftfahrzeugs elektrisch abgetrennt werden. Der Schlauch 2 kann nach dem Abbrechen der elektrischen Verbindungen 4 wieder in seinen ursprünglichen Zustand schrumpfen, damit der Schlauch 2 als Sicherheitselement für die Batterie ohne Austausch wiederholt mehrmals verwendet werden kann.

Darüber hinaus, kann die oben dargestellte Energiespeichereinrichtung auch mit anderen Energiespeichereinrichtungen miteinander verbunden werden. Die insgesamt gespeicherte Energie wird erhöht. Das ist besonders sinnvoll, um auf eine für eine akzeptable Reichweite ausreichende Anzahl von Batteriezellen für ein Elektrofahrzeug zu kommen.

## Patentansprüche

1. Energiespeichereinrichtung, insbesondere für ein Kraftfahrzeug, mit mindestens zwei Energiequellen (1), die über eine elektrische Verbindung (4) verbunden sind, und mindestens einem Sicherheitselement (2), wobei das Sicherheitselement (2) verformbar und/oder expandierbar ist, um die elektrische Verbindung (4) zwischen den Energiequellen (1) aufzutrennen, **dadurch gekennzeichnet, dass** das Sicherheitselement (2) ausgestaltet ist, durch seine Verformung und/oder Expansion direkt an die elektrische Verbindung (4) zu drücken.

2. Energiespeichereinrichtung nach Anspruch 1, wobei die Energiespeichereinrichtung mindestens ein Treibmittel (3) zum Verformen und/oder Expandieren des Sicherheitselements (2) aufweist.

3. Energiespeichereinrichtung nach Anspruch 1 oder 2, wobei die Energiespeichereinrichtung mindestens ein Ermittlungsmittel, insbesondere einen Crashsensor, aufweist, wobei das Treibmittel (3) nach einem Ermittlungsergebnis des Ermittlungsmittels aktivierbar ist.

4. Energiespeichereinrichtung nach einem der Ansprüche 1 bis 3, wobei das Sicherheitselement (2) ein Gewebe- oder Kunststoffschlauch ist.

5. Energiespeichereinrichtung nach einem der vorherigen Ansprüche, wobei das Sicherheitselement (2) wiederholt zur Auftrennung der elektrischen Verbindung (4) verwendbar ist.

6. Energiespeichereinrichtung nach einem der vorherigen Ansprüche, wobei die elektrische Verbindung (4) mindestens eine Sollbruchsstelle (5), insbesondere eine Nut, aufweist.

7. Energiespeichereinrichtung nach einem der vorherigen Ansprüche, wobei das Sicherheitselement (2) zwischen der elektrischen Verbindung (4) und den Energiequellen (1) angeordnet ist.

8. Verfahren zur Auftrennung von elektrischen Verbindungen einer Energiespeichereinrichtung, insbesondere für ein Kraftfahrzeug, mit mindestens zwei Energiequellen (1), bei dem
- mittels zumindest eines Ermittlungsmittels, insbesondere eines Crashsensors, eine Kurzschlussgefahr der Energiespeichereichrichtung, insbesondere einen Crashunfall, ermittelt wird,
- nach einem Ermittlungsergebnis des Ermittlungsmittels ein Treibmittel (3) aktiviert wird, und
- mindestens ein Sicherheitselement (2) durch die Aktivierung des Treibmittels (3) verformt und/oder expandiert wird, um zumindest eine elektrische Verbindung (4) der Energiespeichereinrichtung aufzutrennen, wobei das Sicherheitselement (2) durch seine Verformung und/oder Expansion direkt an die elektrische Verbindung (4) drückt.

9. Verfahren nach Anspruch 8, wobei das Sicherheitselement (2) in Form eines Gewebeoder Kunststoffschlauchs ausgestaltet ist, und das Sicherheitselement (2) zur Auftrennung der elektrischen Verbindung (4) quer zu seiner Längsachse verformt und/oder expandiert wird.

10. Verfahren nach Anspruch 8 oder 9, wobei mindestens eine Sollbruchsstelle (5), insbesondere eine Nut, auf der elektrischen Verbindung (4) vorgesehen wird.

11. Verfahren nach einem der Ansprüche 8 bis 10, wobei das Sicherheitselement (2) zwischen der elektrischen Verbindung (4) und den Energiequellen (1) angeordnet wird.

## Claims

1. Energy storage device, in particular for a motor vehicle, having at least two energy sources (1), which are connected by means of an electrical connection (4), and at least one safety element (2), wherein the safety element (2) can be deformed and/or expanded in order to break the electrical connection (4) between the energy sources (1), **characterized in that** the safety element (2) is designed to press directly against the electrical connection (4) as a result of its deformation and/or expansion.

2. Energy storage device according to Claim 1, wherein the energy storage device has at least one blowing agent (3) for deforming and/or expanding the safety element (2).

3. Energy storage device according to Claim 1 or 2, wherein the energy storage device has at least one determination means, in particular a crash sensor, wherein the blowing agent (3) can be activated in accordance with a determination result of the determination means.

4. Energy storage device according to one of Claims 1 to 3, wherein the safety element (2) is a fabric or plastic tube.

5. Energy storage device according to one of the preceding claims, wherein the safety element (2) can be repeatedly used for breaking the electrical connection (4).

6. Energy storage device according to one of the preceding claims, wherein the electrical connection (4) has at least one predetermined breaking point (5), in particular a groove.

7. Energy storage device according to one of the preceding claims, wherein the safety element (2) is arranged between the electrical connection (4) and the energy sources (1).

8. Method for breaking electrical connections of an energy storage device, in particular for a motor vehicle, having at least two energy sources (1), in which method
- a risk of a short circuit in the energy storage device, in particular a crash, is determined by means of at least one determination means, in particular a crash sensor,
- a blowing agent (3) is activated in accordance with a determination result of the determination means, and
- at least one safety element (2) is deformed and/or expanded by the activation of the blowing agent (3) in order to break at least one electrical connection (4) of the energy storage device, wherein the safety element (2) presses directly against the electrical connection (4) as a result of its deformation and/or expansion.

9. Method according to Claim 8, wherein the safety element (2) is designed in the form of a fabric or plastic tube, and the safety element (2) is deformed and/or expanded transverse to its longitudinal axis in order to break the electrical connection (4).

10. Method according to Claim 8 or 9, wherein at least one predetermined breaking point (5), in particular a groove, is provided on the electrical connection (4).

11. Method according to one of Claims 8 to 10, wherein the safety element (2) is arranged between the electrical connection (4) and the energy sources (1).

## Revendications

1. Dispositif d'accumulation d'énérgie, notamment pour un véhicule automobile, avec au moins deux sources d'énergie (1) reliées par le biais d'une liaison électrique (4), et au moins un élément de sécurité (2), l'élément de sécurité (2) pouvant être déformé et/ou étendu pour permettre de déconnecter la liaison électrique (4) entre les sources d'énergie (1), **caractérisé en ce que** l'élément de sécurité (2) est conçu pour comprimer directement la liaison électrique (4) par le biais de sa déformation et/ou de son expansion.

2. Dispositif d'accumulation d'énergie selon la revendication 1, le dispositif d'accumulation d'énergie comportant au moins un système d'entraînement (3), permettant de déformer et/ou d'étendre l'élément de sécurité (2).

3. Dispositif d'accumulation d'énergie selon la revendication 1 ou 2, le dispositif d'accumulation d'énergie comportant au moins un moyen de détection, notamment un détecteur de panne, le système d'entraînement (3) pouvant être activé en fonction du résultat d'une détection du moyen de détection.

4. Dispositif d'accumulation d'énergie selon l'une quelconque des revendications 1 à 3, l'élément de sécurité (2) étant un tuyau flexible en tissu ou en plastique.

5. Dispositif d'accumulation d'énergie selon l'une quelconque des revendications précédentes, l'élément de sécurité (2) pouvant être utilisé de façon répétée pour déconnecter la liaison électrique (4).

6. Dispositif d'accumulation d'énergie selon l'une quelconque des revendications précédentes, la liaison électrique (4) comportant au moins un point de rupture théorique (5), notamment une rainure.

7. Dispositif d'accumulation d'énergie selon l'une quelconque des revendications précédentes, l'élément de sécurité (2) étant disposé entre la liaison électrique (4) et les sources d'énergie (1).

8. Procédé de déconnexion de liaisons électriques d'un dispositif d'accumulation d'énergie, notamment pour un véhicule automobile, avec au moins deux sources d'énergie (1), dans lequel :
- un risque de court-circuit du dispositif d'accumulation d'énergie, notamment un risque de panne, est détecté à l'aide d'au moins un moyen de détection, notamment d'un détecteur de panne ;
- un système d'entraînement (3) est activé en fonction du résultat de la détection du moyen de détection ; et
- au moins un élément de sécurité (2) est déformé et/ou étendu du fait de l'activation du système d'entraînement (3) pour déconnecter au moins une liaison électrique (4) du dispositif d'accumulation d'énergie, l'élément de sécurité (2) comprimant directement la liaison électrique (4) par le biais de sa déformation et/ou de son expansion.

9. Procédé selon la revendication 8, l'élément de sécurité (2) prenant la forme d'un tuyau flexible en tissu ou en plastique et l'élément de sécurité (2) servant à déconnecter la liaison électrique (4) se déformant et/ou s'étendant transversalement à son axe longitudinal.

10. Procédé selon la revendication 8 ou 9, au moins un point de rupture théorique (5), notamment une rainure, étant prévu sur la liaison électrique (4).

11. Procédé selon l'une quelconque des revendications 8 à 10, l'élément de sécurité (2) étant disposé entre la liaison électrique (4) et les sources d'énergie (1).
